# EUROPEAN PATENT SPECIFICATION

(11) **EP 0 846 148 B1**
(45) Date of publication and mention of the grant of the patent: **03.04.2002**
(21) Application number: 96928547.7
(22) Date of filing: 22.08.1996
(51) Int. Cl.: C09D 9/00

(54) **TERPENE COMPOSITIONS AND THEIR USE AS SEALANT REMOVERS**
TERPENZUSAMMENSETZUNGEN UND IHRE VERWENDUNG ZUR ENTFERNUNG VON DICHTUNGSMASSEN
COMPOSITIONS DE TERPENES ET LEUR EMPLOI COMME AGENTS D'ELIMINATION DE MATIERES D'ETANCHEITE

(30) Priority: 23.08.1995 GB 9517271
(43) Date of publication of application: 10.06.1998
(73) Proprietor: IMPERIAL CHEMICAL INDUSTRIES PLC, London SW1P 3JF (GB)
(72) Inventor: CHARNOCK, Ronald, Scott, Blunham Bedfordshire MK44 3ND (GB); DEAMER, Derrick, Frederick, Stevenage Hertfordshire SG1 7DZ (GB); HARRIS, Anthony, John, Hatfield Hertfordshire AL10 8HA (GB)
(74) Representative: Setna, Rohan P.
(86) International application number: GB9602059
(87) International publication number: WO9708254

(56) References cited:
- EP-A- 0 151 813
- EP-A- 0 578 492
- WO-A-94/24216
- WO-A-95/12741

## Description

The present invention relates to terpene compositions and the use of terpene compositions as a sealant remover. More particularly, the invention relates to the use of terpene compositions for the removal of sealants and to terpene compositions which are thickened with an inorganic thickener.

When used herein, the term "sealant" refers preferably to a sealant applied to a joint, or to an elastic sealant, more preferably to an elastic sealant applied to a joint. The elastic sealant is preferably defined by European Standard EN26927: 1991. This European Standard definition of an elastic sealant is a sealant which after application exhibits predominantly elastic behaviour, i.e. remaining stresses induced in the sealant as a result of joint movement are almost proportional to the strain. Most sealants are synthetic polymers (silicones urethanes, acrylics, polychloroprenes) which are semi-solid before application and later become elastomeric.

When compared to other surface coatings (paints, varnishes etc) sealants are difficult to remove for the following reasons: The chemical nature and high polymer content of sealants makes them intrinsically resistant to water and to the chemical attack of many common solvents, acids and other reagents. These resistances are essential in order for the sealant to serve its purpose; High adhesion on the surface to which it is applied is a characteristic of sealants; Thick layer application is normal when compared to paints and other surface coatings; The elasticity and flexibility characteristic of sealants results in resilience of the sealant to conventional mechanical attack (scraping, pulling etc.).

Sealant removing compositions are known in the art. However these compositions contain harsh chemicals such as substituted sulphonic acids and their salts. These chemicals emit noxious odours (SO₂) and can cause the formation of acid rain. For reasons of environmental concern and since these products are used primarily for the domestic environment, these properties are highly undesirable.

In order to overcome these problems an environmentally and user-friendly terpene based composition is described which enables the easy removal of sealants.

Compositions which contain terpenes are known, for example the cleaning compositions disclosed in US-A-5,277,836 and US-A-4,704,225, the paint removing compositions disclosed in EP-A-0578492 and the deodorizing compositions in US-A-3,360,472. However, it is novel and surprising that compositions which include terpenes, in particular the terpene limonene possess properties which enable them to be used for the removal of sealants.

Accordingly, the present invention provides the use of a composition which comprises a terpene in an amount of from 50% by weight in the removal of a sealant. The active ingredient of the composition, terpene, causes swelling of the sealant material which enables its easy removal from the surface to which it is applied.

Terpene is an unsaturated hydrocarbon which occurs in most essential oils and oleoresins of plants. The terpenes are based on the isoprene unit C₅H₈ and may be either acyclic or cyclic, with one or more benzenoid groups. Examples of terpenes according to the present invention include alpha-pinene, beta-pinene, camphene, mycrene, dipentene (a racemic mixture of d- and l- forms of limonene), limonene (both d- and l- forms) and also include terpene derivatives (terpenoids) such as camphor, menthol, terpineol, borneol and geraniol. Terpenes are common bi-products of the citrus industry and are derived from the peel of oranges, grapefruits and other citrus fruits.

The sealants referred to according to the present invention include silicone rubber sealants, butylene mastic-type sealants, butyl rubber adhesives (used on sealant strip backings) silicone acrylic mixture sealants and other acrylic-type sealants.

The strength of the sealant removing ability of any composition according to the invention is related to the proportion of the composition which is a terpene. Preferably the composition comprises from 60% by weight of a terpene (or a combination of two or more terpenes), more preferably, in order of increasing preference from 70, 80, 85 and 90% by weight of a terpene.

In order to increase the practical use of the terpene comprising composition the final composition may further include a thickener. Any thickener known in the art may be used including cellulosic thickeners such as methyl cellulose, or mineral/inorganic thickeners such as bentonite, silicates (china clay) or colloidal silica. Preferred thickeners in the present invention are mineral or inorganic thickeners due to their effective thickening properties. The most preferred thickener is a fumed silica thickener. Mineral or inorganic thickeners are preferred over cellulosic thickeners since they do not require additional small polar molecules to swell effectively as do the cellulosic thickeners. Such small polar molecules are usually hazardous in nature, for example methanol and dichloromethane. Thickening with mineral or inorganic thickeners is generally faster and more efficient than cellulosic thickeners.

Thickening the composition enables the substance to 'cling' to vertical surfaces, to cover the sealant material and thus more effectively permeate the sealant surface. Thickening also reduces evaporation of the solvent into the air. The proportion of thickener used clearly effects the viscosity of the final product. Less than 4% by weight of a thickener results in a slightly viscous liquid composition which may be conveniently applied by means of a spray. From 4 to 7% by weight of a thickener results in a gel composition of variable thickness which is suitable for application by brush or by cloth. Greater than 7% by weight of a thickener results in a spongy solid composition suitable for application from a tube. For the greatest effect as a sealant remover the range of from 4 to 7% by weight of thickener in the final composition is preferred as it provides the greatest contact area and time between the composition and the sealant surface before evaporation.

The preferred terpene according to the present invention is limonene (either an isomer or a racemic mixture thereof), alpha-pinene or beta-pinene more preferably the isomer d-limonene. This is due to, low hazard, pleasant odour and environmentally friendly properties of these terpenes which have conventionally been used as odourants.

The composition may also optionally include other components such as oils, polymers, perfumes, dyes or a combination of two or more thereof all of which are components known in the art.

The properties of the terpene-containing compositions according to the invention permit removal of sealants from common household surfaces (baths, plastics, laminates and ceramics) without damage. Due to the thickness of most sealant applications it is practical to remove initially by mechanical means as much of the sealant as possible, for example by cutting away with a sharp knife.

The present invention also provides a composition which comprises from 50% by weight of a terpene and a mineral/inorganic thickener of fumed silica for use in the removal of a sealant.

Preferably, this composition comprises from 60% by weight of a terpene, more preferably, in order of increasing preference, from 70, 80, 85 and 90% by weight of a terpene.

The fumed silica thickener may be present in an amount of up to 4%, from 4 to 7% or greater than 7% by weight of the total composition as discussed above. The preferred range is from 4 to 7% as described above.

The preferred terpene of this composition is limonene (either a racemic mixture or as an isomer), alpha or beta-pinene, more preferably d-limonene, for the reasons discussed above.

The composition is advantageously free of pyrrolidones and pyrrolidenes, such as N-methyl-2-pyrrolidone. The composition is preferably also substantially water free and preferably contains 10% by weight or less of water, more preferably 5% by weight or less.

The composition may also optionally include other components such as oils, polymers, perfumes, dyes or a combination of two or more thereof all of which are components known in the art.

The terpene based compositions are particularly useful for the removal of fully cured silicone rubber sealant, and butyl rubber residue from the back of decorative sealant strips. Recently, the use of PVC strips backed with butyl rubber as a decorative sealant has become commonplace. Removal of the butyl rubber residue which is left behind when a sealant strip is removed can be facilitated by a terpene-based composition. When such a PVC strip is removed, a significant portion of the butyl rubber backing will remain adhered to the surface. This residue is often difficult to remove by picking or scraping. An application of a terpene based composition will dissolve the butyl rubber backing and greatly decrease its viscosity and adhesion. Removal of the residue is then possible by gentle scraping away of the dissolved butyl rubber.

The present invention also provides a method of removing sealant adhered to an article comprising the steps of:
(i) coating the sealant with a composition as herein described to thereby result in a loss of adhesion between the article and the sealant; and
(ii) removing the sealant from the article.

The present invention further provides a process for the manufacture of a composition as herein described comprising the steps of mixing together the terpene and the fumed silica thickener with any other optional components to enable dispersion of the fumed silica into the terpene.

The components are usually combined together in a blade mixer and are initially given a low shear. As the thickened gel composition starts to form, the shear may be increased slightly, enabling the complete dispersion of the fumed silica into the gel. The whole mixing process takes approximately 10 minutes.

The present invention will now be described in more detail by the following non-limiting examples:

### Example 1

Process for the manufacture of sealant removing composition:
95g of pure d-limonene was mixed with 5g of fumed silica thickener (Wacker HDK N 20).

This mixture was then dispersed into a homogeneous solution using a Heidolf high speed dispersion mixer for between 5 to 10 minutes at approximately 500 rpm The 100g of resulting mixture was sufficient to cover approximately 4 metres of normally applied sealant.

The resulting mixture was then used to demonstrate its sealant removing properties.

### Example 2

Use of a terpene based composition for the removal of a fully cured silicone rubber sealant.

A several year old fully cured silicone rubber sealant was removed from a kitchen surface, prior to resealing as follows. The old sealant lay between a stainless steel sink-top and a tiled "splashback" area at a 90 degree angle. The terpene composition used is described in example 1.

Using a sharp knife the sealant material was cut away, as close as possible, from the surfaces to which it was applied. The excess sealant was discarded leaving relatively thin layers of sealant adhered to the surfaces.

A liberal coat of the sealant remover was applied to the thin layers of sealant with a brush and/or spreading knife. This coating was left for approximately 10 minutes. This allowed the optimum time to allow penetration of the terpene into the material surface without excessive loss of solvent via evaporation.

During this time the sealant material became swollen and "peeling away" of the sealant, from the vertical surface was observed. The chemical action between the sealant and the remover resulted in loss of adhesion of the sealant to the surfaces.

The sealant remover was finally removed by scraping away the weakened form of the sealant with an appropriate tool such as a blunt knife or plastic scraper.

The treated surfaces should be cleaned with soap and water or cleaning solutions before resealing.

## Claims

1. Use of a composition which comprises a terpene in an amount of from 50% by weight in the removal of a sealant.

2. Use as claimed in claim 1 wherein the composition comprises from 90% by weight of a terpene.

3. Use as claimed in claim 1 or claim 2 wherein the composition further comprises a thickener.

4. Use as claimed in claim 3 wherein the thickener is a cellulose thickener or a mineral thickener.

5. Use as claimed in claim 4 wherein the thickener is a fumed silica reagent.

6. Use as claimed in any one of claims 3 to 5 wherein the thickener is present in an amount in the range of from 4 to 7% by weight.

7. Use as claimed in any one of claims 1 to 6 wherein the terpene is limonene, alpha-pinene or beta-pinene.

8. Use as claimed in claim 7 wherein the limonene is d-limonene.

9. Use as claimed in any one of claims 1 to 8 wherein the sealant is removed from a plastics, laminate or a ceramic surface.

10. A composition comprising from 50% by weight of a terpene and a mineral-inorganic thickener of fumed silica for use in the removal of a sealant.

11. A composition as claimed in claim 10 wherein the composition comprises from 70% by weight of a terpene.

12. A composition as claimed in claim 10 or claim 11 wherein the composition comprises from 90% by weight of a terpene.

13. A composition as claimed in any one of claims 10 to 12 wherein the thickener is present in an amount of from 4 to 7% by weight.

14. A composition as claimed in any one of claims 10 to 13 wherein the terpene is limonene, alpha-pinene or beta-pinene.

15. A composition as claimed in claim 14 wherein the terpene is d-limonene.

16. A composition as claimed in any one of claims 10 to 15 which is free of pyrrolidones and pyrrolidenes.

17. An N-methyl-2-pyrrolidone free composition as claimed in claim 16.

18. A composition as claimed in any one of claims 10 to 17 which is substantially water free.

19. A composition as claimed in any one of claims 10 to 18 which consists of 95% by weight of d-limonene and 5% by weight of a fumed silica thickener.

20. A method of removing sealant adhered to an article comprising the steps of:
(i) coating the sealant with a composition as claimed in any one of claims 10 to 19 to thereby result in a loss of adhesion between the article and the sealant; and
(ii) removing the sealant from the article.

21. A process for the manufacture of a composition as claimed in any one of claims 10 to 19 comprising the steps of mixing together the terpene and fumed silica thickener, with any other optional components to enable dispersion of the fumed silica into the terpene.

## Patentansprüche

1. Verwendung einer Zusammensetzung, die ein Terpen in einer Menge ab 50 Gew.-% umfasst, zur Entfernung eines Dichtungsmittels.

2. Verwendung nach Anspruch 1, wobei die Zusammensetzung ab 90 Gew.-% eines Terpens umfasst.

3. Verwendung nach Anspruch 1 oder 2, wobei die Zusammensetzung ferner ein Verdickungsmittel umfasst.

4. Verwendung nach Anspruch 3, wobei das Verdickungsmittel ein Cellulose-Verdickungsmittel oder ein mineralisches Verdickungsmittel ist.

5. Verwendung nach Anspruch 4, wobei das Verdickungsmittel ein Quarzpulver-Reagens ist.

6. Verwendung nach einem der Ansprüche 3 bis 5, wobei das Verdickungsmittel in einer Menge im Bereich von 4 bis 7 Gew.-% vorhanden ist.

7. Verwendung nach einem der Ansprüche 1 bis 6, wobei das Terpen Limonen, alpha-Pinen oder beta-Pinen ist.

8. Verwendung nach Anspruch 7, wobei das Limonen d-Limonen ist.

9. Verwendung nach einem der Ansprüche 1 bis 8, wobei das Dichtungsmittel von Kunststoffen, Laminat oder einer keramischen Oberfläche entfernt wird.

10. Zusammensetzung umfassend ab 50 Gew.-% eines Terpens und ein mineralisch-anorganisches Verdickungsmittel aus Quarzpulver zur Verwendung bei der Entfernung eines Dichtungsmittels.

11. Zusammensetzung nach Anspruch 10, worin die Zusammensetzung ab 70 Gew.-% eines Terpens umfasst.

12. Zusammensetzung nach Anspruch 10 oder 11, worin die Zusammensetzung ab 90 Gew.-% eines Terpens umfasst.

13. Zusammensetzung nach einem der Ansprüche 10 bis 12, worin das Verdickungsmittel in einer Menge von 4 bis 7 Gew.-% vorhanden ist.

14. Zusammensetzung nach einem der Ansprüche 10 bis 13, worin das Terpen Limonen, alpha-Pinen oder beta-Pinen ist.

15. Zusammensetzung nach Anspruch 14, worin das Terpen d-Limonen ist.

16. Zusammensetzung nach einem der Ansprüche 10 bis 15, die frei von Pyrrolidonen und Pyrrolidenen ist.

17. N-Methyl-2-pyrrolidon-freie Zusammensetzung nach Anspruch 16.

18. Zusammensetzung nach einem der Ansprüche 10 bis 17, die im Wesentlichen wasserfrei ist.

19. Zusammensetzung nach einem der Ansprüche 10 bis 18, die zu 95 Gew.-% aus d-Limonen und zu 5 Gew.-% aus einem Quarzpulver-Verdickungsmittel besteht.

20. Verfahren zur Entfernung eines Dichtungsmittels, das an einem Gegenstand haftet, umfassend die Schritte:
(i) Bedecken des Dichtungsmittels mit einer Zusammensetzung nach einem der Ansprüche 10 bis 19, um dabei einen Verlust der Haftung zwischen dem Gegenstand und dem Dichtungsmittel zu erreichen; und
(ii) Entfernen des Dichtungsmittels von dem Gegenstand.

21. Verfahren zur Herstellung einer Zusammensetzung nach einem der Ansprüche 10 bis 19, umfassend die Schritte des Zusammenmischens des Terpens und des Quarzpulver-Verdickungsmittels mit jedwelchen anderen frei wählbaren Komponenten, um die Dispersion des Quarzpulvers in das Terpen zu ermöglichen.

## Revendications

1. Utilisation d'une composition qui comprend un terpène en une quantité de 50 % en poids dans l'élimination d'un agent d'étanchéité.

2. Utilisation suivant la revendication 1, dans laquelle la composition comprend 90 % en poids d'un terpène.

3. Utilisation suivant la revendication 1 ou la revendication 2, dans laquelle la composition comprend en outre un épaississant.

4. Utilisation suivant la revendication 3, dans laquelle l'épaississant est un épaississant cellulosique ou un épaississant minéral.

5. Utilisation suivant la revendication 4, dans laquelle l'épaississant est un réactif à base de fumées de silice.

6. Utilisation suivant l'une quelconque des revendications 3 à 5, dans laquelle l'épaississant est présent en une quantité comprise dans l'intervalle de 4 à 7 % en poids.

7. Utilisation suivant l'une quelconque des revendications 1 à 6, dans laquelle le terpène est le limonène, l'alpha-pinène ou le bêta-pinène.

8. Utilisation suivant la revendication 7, dans laquelle le limonène est le d-limonène.

9. Utilisation suivant l'une quelconque des revendications 1 à 8, dans laquelle l'agent d'étanchéité est éliminé d'une matière plastique, d'un stratifié ou d'une surface céramique.

10. Composition comprenant 50 % en poids d'un terpène et d'un épaississant minéral-inorganique à base de fumées de silice, à des fins d'utilisation dans l'élimination d'un agent d'étanchéité.

11. Composition suivant la revendication 10, qui comprend 70 % en poids d'un terpène.

12. Composition suivant la revendication 10 ou la revendication 11, qui comprend 90 % en poids d'un terpène.

13. Composition suivant l'une quelconque des revendications 10 à 12, dans laquelle l'épaississant est présent en une quantité de 4 à 7 % en poids.

14. Composition suivant l'une quelconque des revendications 10 à 13, dans laquelle le terpène est le limonène, l'alpha-pinène ou le bêta-pinène.

15. Composition suivant la revendication 14, dans laquelle le terpène est le d-limonène.

16. Composition suivant l'une quelconque des revendications 10 à 15, qui est dépourvue de pyrrolidones et pyrrolidènes.

17. Composition dépourvue de N-méthyl-2-pyrrolidone suivant la revendication 16.

18. Composition suivant l'une quelconque des revendications 10 à 17, qui est pratiquement dépourvue d'eau.

19. Composition suivant l'une quelconque des revendications 10 à 18, qui consiste en 95 % en poids de d-limonène et 5 % en poids d'un épaississant à base de fumées de silice.

20. Procédé pour éliminer un agent d'étanchéité adhérant à un article, comprenant les étapes consistant :
(i) à revêtir l'agent d'étanchéité avec une composition suivant l'une quelconque des revendications 10 à 19, pour qu'il en résulte ainsi une perte d'adhérence entre l'article et l'agent d'étanchéité ; et
(ii) à éliminer l'agent d'étanchéité de l'article.

21. Procédé pour la production d'une composition suivant l'une quelconque des revendications 10 à 19, comprenant les étapes consistant à mélanger l'un à l'autre le terpène et l'épaississant à base de fumées de silice, avec n'importe quels autres constituants facultatifs pour permettre la dispersion des fumées de silice dans le terpène.
